(19) Europäisches Patentamt
European Patent Office
Office européen des brevets

(11) **EP 4 535 903 A1**

(12) **EUROPEAN PATENT APPLICATION**
published in accordance with Art. 153(4) EPC

(43) Date of publication:
**09.04.2025 Bulletin 2025/15**

(21) Application number: **22943240.6**

(22) Date of filing: **27.05.2022**

(51) International Patent Classification (IPC):
**H04W 72/12** (2023.01)   **H04W 52/08** (2009.01)

(52) Cooperative Patent Classification (CPC):
**H04W 52/08; H04W 72/12**

(86) International application number:
**PCT/CN2022/095763**

(87) International publication number:
**WO 2023/226042 (30.11.2023 Gazette 2023/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LUO, Xingyi**
**Beijing 100085 (CN)**

(74) Representative: **Hersina, Günter et al**
**Schoppe, Zimmermann, Stöckeler Zinkler, Schenk & Partner mbB Patentanwälte**
**Radlkoferstrasse 2**
**81373 München (DE)**

(54) **POWER CONTROL METHOD AND APPARATUS, DEVICE, AND STORAGE MEDIUM**

(57)   The present application relates to the technical field of communications, and provides a power control method and apparatus, a device, and a storage medium. The method comprises: receiving indication information, the indication information being used for indicating transmission power corresponding to at least two antenna panels in a terminal during uplink transmission; and on the basis of the transmission power, determining respective transmission powers of the at least two antenna panels during simultaneous uplink transmission. By means of the indication information indicating the transmission power corresponding to the plurality of antenna panels during uplink transmission, the transmission power corresponding to the antenna panels during uplink transmission is determined, thereby realizing the control of the transmission power of the plurality of antenna panels during simultaneous uplink transmission, so as to promote the deployment of simultaneous uplink transmission of the plurality of antenna panels, and improving the throughput of uplink transmission.

receiving indication information, in which the indication information indicates an output power corresponding to at least two antenna panels in the terminal during uplink transmission — 510

determining a output power corresponding to each of the at least two antenna panels that perform the uplink transmission simultaneously, based on the output power — 520

FIG. 5

**Description**

**TECHNICAL FIELD**

The disclosure relates to a field of communication technologies, more particularly to a method and an apparatus for controlling a power.

**BACKGROUND**

In Rel 17, for a scene with multiple transmission reception points (TRPs), a user equipment (UE) uses a time-division transmission way in an uplink transmission, that is, the UE transmits uplink data to a TRP1 of an access network device at a first moment, and the UE transmits uplink data to a TRP2 of the access network device at a second moment.
In combination with the uplink transmission above, Rel 17 also discusses a TRP-specific power control way. A process of the TRP-specific power control way is to indicate two power control parameter sets to UE, which are used to determine an output power in two transmission processes respectively.
However, a power control way in the related art is no longer suitable for a scene where multiple antenna panels are employed to transmit the uplink data to the multiple TRPs simultaneously in a space division way in Rel 18.

**SUMMARY**

Embodiments of the disclosure provide a method and an apparatus for controlling a power, a device, and a storage medium. An output power is allocated to multiple antenna panels when uplink transmission is performed simultaneously by the multiple antenna panels. The technical solution includes the following.
According to an aspect of the disclosure, there is provided a method for controlling a power. The method is executed by a terminal, and includes:

    receiving indication information, in which the indication information indicates an output power corresponding to at least two antenna panels in the terminal during uplink transmission; and
    determining an output power corresponding to each of the at least two antenna panels that perform the uplink transmission simultaneously, based on the output power.

According to an aspect of the disclosure, there is provided a method for controlling a power. The method is executed by a network device, and includes:

    sending indication information, in which the indication information indicates an output power of at least two antenna panels in a terminal during uplink transmission; and
    receiving uplink data, in which the uplink data is data when the at least two antenna panels perform the uplink transmission simultaneously after the terminal determines an output power corresponding to each of the at least two antenna panels based on the output power indicated by the indication information.

According to an aspect of the disclosure, there is provided an apparatus for controlling a power. The apparatus includes:

    a sending module, configured to send indication information, in which the indication information indicates an output power of at least two antenna panels in a terminal during uplink transmission; and
    a receiving module, configured to receive uplink data, in which the uplink data is data when the at least two antenna panels perform the uplink transmission simultaneously after the terminal determines an output power corresponding to each of the at least two antenna panels based on the output power indicated by the indication information.

According to an aspect of the disclosure, there is provided an apparatus for controlling a power. The apparatus includes:

    a receiving module, configured to receive indication information, in which the indication information indicates an output power corresponding to at least two antenna panels in the terminal during uplink transmission; and
    a determining module, configured to determine an output power corresponding to each of the at least two antenna panels that perform the uplink transmission simultaneously, based on the output power.

According to an aspect of the disclosure, there is provided a terminal. The terminal includes a processor; and a transceiver connected with the processor. The processor is configured to load and execute executable instructions to realize the method for controlling the power as described above.

According to an aspect of the present disclosure, there is provided a network device. The network device includes:

a processor;
a transceiver connected with the processor; and
a memory for storing instructions executable by the processor,

The processor is configured to load and execute the instructions to realize the method for controlling the power in embodiments of the disclosure as described above.

According to an aspect of the disclosure, there is provided a computer-readable storage medium. The computer-readable storage medium is configured to store at least one instruction, at least one program, a code set or an instruction set, and the at least one instruction, the at least one program, the code set or the instruction set is loaded and executed by a processor to realize the method for controlling the power as described above.

The technical solution according to embodiments of the disclosure at least has following beneficial effects.

In case that the terminal performs the uplink transmission by the multiple antenna panels simultaneously, the terminal determines the output power corresponding to each antenna panel during the uplink transmission by the indication information indicating the output power corresponding to the multiple antenna panels, thus realizing the control of the output powers of the multiple antenna panels that perform the uplink transmission simultaneously, promoting a deployment of the multiple antenna panels that perform the uplink transmission simultaneously, and improving a throughput of the uplink transmission.

**BRIEF DESCRIPTION OF THE DRAWINGS**

In order to more clearly illustrate a technical solution in embodiments of the disclosure, accompanying drawings needed to use in the description of embodiments will be introduced clearly below. Apparently, the accompanying drawings described below are only a part of embodiments of the disclosure. For the ordinary skilled in the art, other accompanying drawings may further be obtained based on these accompanying drawings without creative work.

FIG. 1 is a schematic diagram illustrating a communication system according to an exemplary embodiment of the disclosure.

FIG. 2 is a schematic diagram illustrating an uplink transmission in a space division scene according to an exemplary embodiment of the disclosure.

FIG. 3 is a schematic diagram illustrating an uplink transmission in a space division scene according to an exemplary embodiment of the disclosure.

FIG. 4 is a schematic diagram illustrating an uplink transmission in a space division scene according to an exemplary embodiment of the disclosure.

FIG. 5 is a flow chart illustrating a method for controlling a power according to an exemplary embodiment of the disclosure.

FIG. 6 is a flow chart illustrating a method for controlling a power according to an exemplary embodiment of the disclosure.

FIG. 7 is a flow chart illustrating a method for controlling a power according to an exemplary embodiment of the disclosure.

FIG. 8 is a flow chart illustrating a method for controlling a power according to an exemplary embodiment of the disclosure.

FIG. 9 is a flow chart illustrating a method for controlling a power according to an exemplary embodiment of the disclosure.

FIG. 10 is a flow chart illustrating a method for controlling a power according to an exemplary embodiment of the disclosure.

FIG. 11 is a flow chart illustrating a method for controlling a power according to an exemplary embodiment of the disclosure.

FIG. 12 is a block diagram illustrating an apparatus for controlling a power according to an exemplary embodiment of the disclosure.

FIG. 13 is a block diagram illustrating an apparatus for controlling a power according to an exemplary embodiment of the disclosure.

FIG. 14 is a block diagram illustrating an apparatus for controlling a power according to an exemplary embodiment of the disclosure.

FIG. 15 is a block diagram illustrating a communication device according to an exemplary embodiment of the disclosure.

**DETAILED DESCRIPTION**

In order to make a purpose, a technical solution and an advantage of the disclosure more clear, further description is made in detail to the embodiments of the disclosure with reference to the accompanying drawings.

Reference will now be made in detail to exemplary embodiments, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with embodiments of the disclosure. Instead, they are merely examples of the apparatuses and methods consistent with some aspects of the disclosure as detailed in the appended claims.

Terms described in the disclosure are only for the purpose of describing specific embodiments, but should not be construed to limit the disclosure. As used in the disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although the terms such as "first", "second", "third", etc. may be used in embodiments of disclosure to describe various information, such information should not be limited by these terms. These terms are only used to distinguish the same type of information from each other. For example, first information may also be referred to as second information, and similarly, the second information may also be referred to as the first information, without departing from the scope of the disclosure. As used herein, the term "if" may be construed to mean "when" or "upon" or "in response to determining" depending on the context.

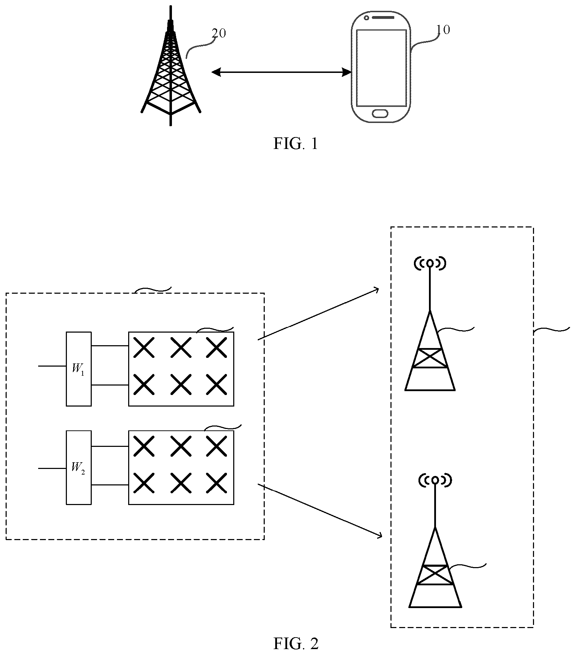

Referring to FIG. 1, FIG. 1 illustrates a schematic diagram illustrating a communication system according to an exemplary embodiment of the disclosure. The communication system may include a terminal 10 and an access network device 20.

The number of terminals 10 is usually multiple, and one or more terminals 10 may be distributed in a cell managed by each access network device 20. The terminal 10 may include various handheld devices with a wireless communication function, vehicle-mounted devices, wearable devices, computing devices or other processing devices connected to a wireless modem, as well as various forms of UEs, mobile stations (MSs) and the like. For convenience of description, in embodiments of the disclosure, the above-mentioned devices are collectively referred to as terminal.

The access network device 20 is a device deployed in an access network to provide the wireless communication function for the terminal 10. The access network device 20 may include various forms of macro base stations, micro base stations, relay stations and access points. The access network device 20 may also be a location management function network element. Alternatively, the location management function network element includes a location server, which may be implemented as any one of the following: a location management function (LMF), an enhanced serving mobile location center (E-SMLC), secure a user plane location (SUPL), an SUPL location platform (SUPL SLP). In systems with different wireless access technologies, names of devices with an access network function may be different. For example, in a 5G new ratio (NR) system, the devices are called gNodeB or gNB. With the evolution of communication technology, the name "access network device" may change. For convenience of description, in embodiments of the disclosure, the above devices providing the wireless communication function for the terminal 10 are collectively referred to as the access network device. A connection may be established between the access network device 20 and the terminal 10 through an air interface, to perform communication through the connection, in which the communication includes an interaction of signaling and data. There may multiple access network devices 20, and two adjacent access network devices 20 may also communicate in a wired or wireless mean. The terminal 10 may switch between different access network devices 20, that is, establish connections with different access network devices 20.

The "5G NR system" in embodiments of the disclosure may also be called 5G system or NR system, but those skilled in the art may understand a meaning of the 5G system or NR system. The technical solution described in embodiments of the disclosure may be applied to the 5G NR system, and may also be applied to a subsequent evolution system of the 5G NR system.

Before the UE transmits uplink data to multiple TRPs, the UE needs to determine an output power used in transmitting the uplink data.

An uplink output power of a channel or signal is determined based on Formula 1:

$$P = \min[P_{CMAX}, \{\text{open loop part}\} + \{\text{closed loop part}\} + \{\text{other adjustment quantity}\}], \qquad \text{Formula 1:}$$

where, $P_{CMAX}$ is an allowed maximum uplink output power, the open loop part is calculated based on open-loop power parameters P0, alpha and PL, where P0 represents a target value of ab open-loop receiver power, alpha represents a compensation factor of a partial path loss, and PL represents an estimated value of a downlink path loss determined based on a reference signal; the closed loop part is a power used to dynamically adjust any uplink transmission of the terminal and determined by a closed-loop power parameter, that is, a power control adjustment state value; and other adjustment quantity is related to information such as resource allocation and link adaptation. The open loop part and the closed loop part need to be indicated by indication information.

In the related art, the UE may determine an output power of an uplink channel or signal based on a power control parameter indicated by the base station, and then the UE may divide the output power equally at each port of the uplink channel or signal.

However, in an uplink transmission in a space division scene, as illustrated in FIG. 2, FIG. 2 illustrates the uplink transmission in the space division scene. Assuming that the number of data layers of a physical uplink shared control channel (PUSCH) is 2, data of a layer 1 is transmitted to a first transmission reception point (TRP) 221 corresponding to an access network device 220 through a first antenna panel 211 in a user terminal 210, and data of layer2 is transmitted to a second TRP 222 through a second antenna panel 212. A channel employed by the first antenna panel 211 to the first TRP 221 is different from a channel employed by the second antenna panel 212 to the second TRP 222. Therefore, there needs to determine different output powers for different antenna panels.

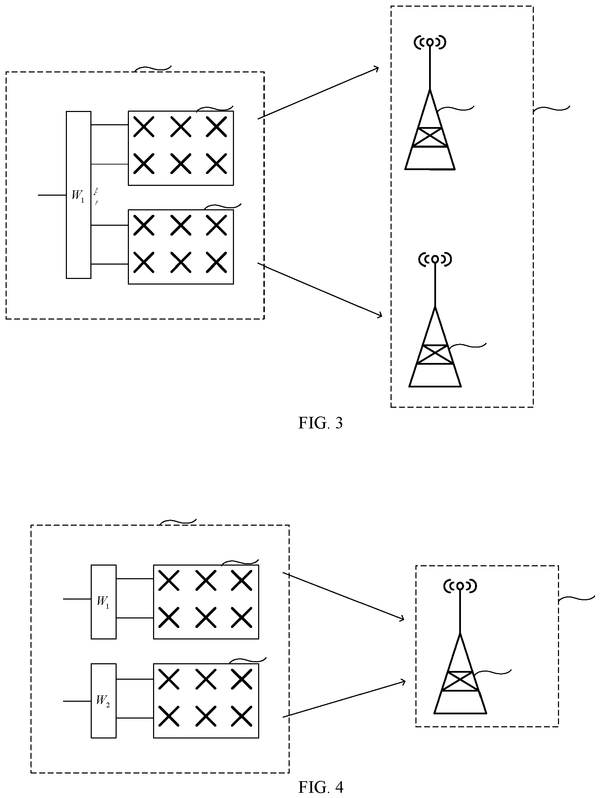

As illustrated in FIG. 3, FIG. 3 illustrates an uplink transmission in another space division scene.

Data of a layer1 is transmitted to a second TRP 322 corresponding to an access network device 330 through a first antenna panel 311 in a user terminal 310, and the data of the layer1 is also transmitted to a first TRP 321 through a second antenna panel 312 simultaneously. A channel employed by the first antenna panel 311 to the second TRP 322 is different from a channel employed by the second antenna panel 312 to the first TRP 321. Therefore, there needs to determine different output powers for different panels.

As illustrated in FIG. 4, FIG. 4 illustrates an uplink transmission in another space division scene. Data of a layer1 is transmitted to a first TRP 421 corresponding to an access network device 430 through a first antenna panel 411 in a user terminal 410, and data of a layer2 is also transmitted to the first TRP 421 through a second antenna panel 412 simultaneously. A channel used by the first antenna panel 411 to the first TRP 421 is different from a channel employed by the second antenna panel 312 to the first TRP 421 are different, so it is necessary to determine different output powers for each panel.

However, it may not be realized that respective output powers are determined for respective panels in the above scenes by the power control for the above scenes in an existing protocol, because the power control in the related art is based on a channel/signal, and a channel output power determined based on an indicated power control parameter is averagely distributed in ports of the channel/signal.

Based on this, the disclosure provides a method for controlling a power, and provides a solution to allocate a power to different antenna panels in the UE in a space division transmission scene. Description is made below to a technical solution according to embodiments of the disclosure.

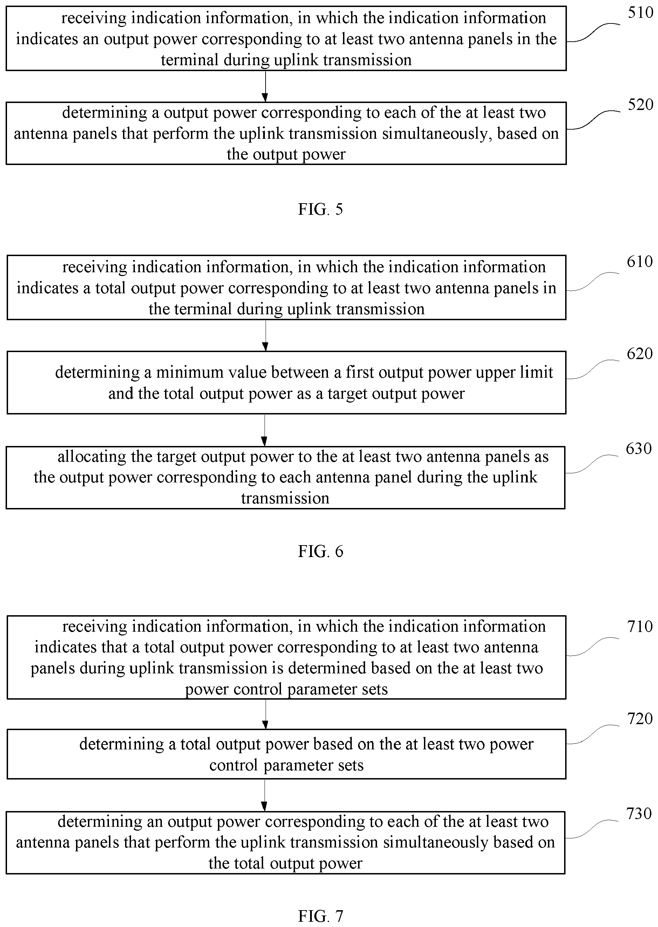

Referring to FIG. 5, FIG. 5 is a flow chart illustrating a method for controlling a power according to an exemplary embodiment of the disclosure. The method may be applied to the terminal in the communication system as illustrated in FIG. 1. The method includes the following

At block 510, indication information is received, in which the indication information indicates an output power of at least two antenna panels in the terminal that perform uplink transmission.

Alternatively, the indication information is information sent by a network device to the terminal. The network device includes at least one of an access network device, a core network device, or other device.

Alternatively, when the indication information indicates the output power of the at least two antenna panels that the uplink transmission by indicating a determining way of the output power. In an example, when the indication information is used to indicate the determination way of the output power, the indication information may indicate the terminal to determine the output power based on a power control parameter set received.

At block 520, an output power corresponding to each of the at least two antenna panels that perform the uplink transmission simultaneously is determined based on the output power.

In embodiments of the disclosure, the terminal is provided with the at least two antenna panels for the uplink transmission, and the at least two antenna panels have a capability of performing the uplink transmission simultaneously.

In some embodiments, the at least two antenna panels may employ different uplink channels or uplink signals for the uplink transmission. Alternatively, the uplink channel may be a PUSCH or a physical uplink control channel (PUCCH), and the uplink signal may be an uplink reference signal, such as an uplink sounding reference signal (SRS).

For example, the terminal determines the output power of the at least two antenna panels when performing the uplink transmission simultaneously based on the output power indicated by the indication information. In an example, in case that the at least two antenna panels include a first antenna panel and a second antenna panel, the terminal determines a first output power corresponding to the first antenna panel and a second output power corresponding to the second antenna panel based on the output power indicated by the indication information.

In conclusion, in the technical solution according to embodiments of the disclosure, when the terminal performs the uplink transmission through multiple antenna panels simultaneously, the output power corresponding to each antenna panel during the uplink transmission is determined through the indication information indicating the output power of the multiple antenna panels, thus realizing control of the output powers of the multiple antenna panels during the uplink transmission simultaneously, promoting a deployment of the multiple antenna panels for the uplink transmission simultaneously, and improving a throughput of the uplink transmission.

Referring to FIG. 6, FIG. 6 is a flow chart illustrating a method for controlling a power according to an exemplary embodiment of the disclosure. In embodiments of the disclosure, the output power indicated by the indication information is a total output power corresponding to the at least two antenna panels. The method includes the following.

At block 610, indication information is received, in which the indication information indicates the total output power corresponding to the at least two antenna panels in a terminal that perform uplink transmission.

Alternatively, the indication information is information sent by a network device to the terminal. The network device includes at least one of an access network device, a core network device, or other device.

At block 620, a minimum value between a first output power upper limit and the total output power is determined as a target output power.

In some embodiments, the terminal corresponds to the first output power upper limit $P_{CMAX1}$. For example, the terminal determines the first output power upper limit $P_{CMAX1}$ above based on a protocol, and the first output power upper limit $P_{CMAX1}$ above is used to indicate a maximum output power that the terminal may realize during the uplink transmission, that is, a maximum output power.

In embodiments of the disclosure, the target output power P allocated to the at least two antenna panels is determined based on both the first output power upper limit $P_{CMAX1}$ and the total output power $P_{total}$. For example, in case that the total output power $P_{total}$ indicated by the indication information does not exceed the first output power upper limit $P_{CMAX1}$ of the terminal, it means that the terminal may perform power allocation based on the total output power $P_{total}$ indicated by the indication information; and in case that the total output power $P_{total}$ indicated by the indication information exceeds the first output power upper limit $P_{CMAX1}$ of the terminal, it means that the terminal may not support the total output power $P_{total}$ indicated by the indication information, so the terminal may perform power allocation based on the first output power upper limit $P_{CMAX1}$, that is, $P=\min\{P_{total}, P_{CMAX1}\}$.

At block 630, the target output power P is allocated to the at least two antenna panels as the output power corresponding to each antenna panel during the uplink transmission.

For example, the terminal allocates the target output power P based on a specified way. Alternatively, the specified way may be at least one of following ways:

A first way: power equal division is performed based on the ports.

For example, the target output power P is allocated to the at least two antenna panels as the output power corresponding to each antenna panel during the uplink transmission based on a ratio of the number of ports corresponding to each antenna panel to a total number of ports of the terminal. That is, the target output power is divided equally to each port, and different antenna panels are allocated with different output powers based on the number of ports.

For example, when the total number of ports of the terminal is represented by N and the number of ports corresponding to an $i^{th}$ antenna panel in the at least two antenna panels is represented by $N_i$, an output power allocated to the $i^{th}$ antenna panel is $(N_i/N)P$, where the N ports are ports configured to the uplink transmission, and i and N are positive integers.

In an example, it is explained that the terminal has two antenna panels, that is, the at least two antenna panels include a first antenna panel and a second antenna panel. For example, the first antenna panel includes $N_1$ ports, and the second antenna panel includes $N_2$ ports, where $N_1$ and $N_2$ are positive integers. A first output power $P_{panel1}$ allocated to the first antenna panel is $(N_1/N)P$, that is, as illustrated in Formula two. A second output power $P_{panel2}$ allocated to the second antenna panel as $(N_2/N)P$, as illustrated in Formula three. $P_{total}$ represents the total output power, and $P_{CMAX1}$ represents the first output power upper limit.

$$\text{Formula two:} \quad P_{panel1} = \frac{N_1}{N}P = \min\{P_{total}, P_{CMAX1}\}\frac{N_1}{N}$$

$$\text{Formula three:} \quad P_{panel2} = \frac{N_2}{N}P = \min\{P_{total}, P_{CMAX1}\}\frac{N_2}{N}$$

A second way: power allocation is performed based on a ratio of an expected power corresponding to each antenna panel to a total expected power corresponding to all antenna panels.

For example, the target output power P is allocated to the at least two antenna panels as the output power corresponding to each antenna panel that performs the uplink transmission based on a ratio of the expected power corresponding to each antenna panel to a total expected power for the at least two antenna panels.

For example, when the total expected power corresponding to the at least two antenna panels is $\sum_{i=1}^{n} P_i$, where $P_i$ represents an expected power corresponding to an $i^{th}$ antenna panel, the number of the at least two antenna panels is n, and i and n are positive integers, then an output power allocated to the $i^{th}$ antenna panel is $(P_i / \sum_{i=1}^{n} P_i)P$.

In an example, description is made by taking that the terminal has two antenna panels as an example, that is, the at least two antenna panels include a first antenna panel and a second antenna panel. For example, a first expected power corresponding to the first antenna panel is $P_1$, and a second expected power corresponding to the second antenna panel is $P_2$. A first output power $P_{panel1}$ allocated to the first antenna panel is $(P_1/(P_1 + P_2))P$, that is, as illustrated in Formula 4, a second output power $P_{panel2}$ allocated to the second antenna panel is $(P_2/(P_1 + P_2))P$, that is, as illustrated in Formula 5. $P_{total}$ represents the total output power, and $P_{CMAX1}$ represents the first output power upper limit.

$$\text{Formula four:} \quad P_{panel1} = \frac{P_1}{P_1+P_2} P = \min\{P_{total}, P_{CMAX1}\} \frac{P_1}{P_1+P_2}$$

$$\text{Formula five:} \quad P_{panel2} = \frac{P_2}{P_1+P_2} P = \min\{P_{total}, P_{CMAX1}\} \frac{P_2}{P_1+P_2}$$

In some embodiments, the expected power corresponding to the antenna panel may be determined based on a power control parameter set indicated by the access network device. For example, the access network device indicates a power control parameter set corresponding to a TRP, and then the expected power corresponding to the antenna panel is determined by a power control parameter set corresponding to a TRP pointed by the antenna panel that performs the uplink transmission.

A third way: power allocation is performed based on both the port and an expected power corresponding to each antenna panel.

For example, the target output power P is allocated to the at least two antenna panels as an output power corresponding to each antenna panel that performs the uplink transmission based on a ratio of the number of ports corresponding to each antenna panel to a total number of ports of the terminal and a ratio of the expected power corresponding to each antenna panel to a total expected power for the at least two antenna panels.

For example, the number of ports corresponds to a first weight a, the expected power corresponds to a second weight b, 0 < a < 1, 0 < b < 1, and a+b=1. In case that the total number of ports of the terminal is N, the number of the at least two antenna panels is n, the number of ports corresponding to an $i^{th}$ antenna panel in the at least two antenna panels is $N_i$, and an expected power corresponding to the $i^{th}$ antenna panel is $P_i$, an output power allocated to the $i^{th}$ antenna panel is

$$\left(a(P_i / \sum_{i=1}^{n} P_i) + \text{b}(N_i / N)\right)P$$ , where i, n, and N are all positive integers.

In an example, description is made by taking that the terminal corresponds to two antenna panels, that is, the at least two antenna panels include a first antenna panel and a second antenna panel. The first antenna panel includes $N_1$ ports and the second antenna panel includes $N_2$ ports. The total number of ports of the terminal is N. N1, N2 and N are positive integers. A first expected power corresponding to the first antenna panel is $P_1$, and a second expected power corresponding to the second antenna panel is $P_2$. In case that the number of ports and the expected power correspond to different weights respectively, a first output power $P_{panel1}$ allocated to the first antenna panel is $(aP_1/(P_1 + P_2) + b N_1/N)P$, that is illustrated in Formula 6. A second output power $P_{panel2}$ allocated to the second antenna panel is $(aP_2/(P_1 + P_2) + b N_2/N)P$, that is, illustrated in Formula 7. $P_{total}$ represents the total output power, and $P_{CMAX1}$ represents the first output power upper limit.

$$\text{Formula six:} \quad P_{panel1} = \left(a \frac{P_1}{P_1+P_2} + b \frac{N_1}{N}\right) P = \min\{P_{total}, P_{CMAX1}\}\left(a \frac{P_1}{P_1+P_2} + b \frac{N_1}{N}\right)$$

Formula seven:
$$P_{panel2} = \left(a\frac{P_2}{P_1+P_2} + b\frac{N_2}{N}\right)P = \min\{P_{total}, P_{CMAX1}\}\left(a\frac{P_2}{P_1+P_2} + b\frac{N_2}{N}\right)$$

Alternatively, the first weight a and the second weight b may be indicated by the indication information. Alternatively, the first weight a and the second weight b may be indicated by the access network device through a signaling. Alternatively, the first weight a and the second weight b may be set by the terminal itself. Alternatively, the first weight a and the second weight b may be defined by a protocol.

Alternatively, the above specified way may be set by the terminal, indicated by the indication information or other signal through the access network device, or stipulated in a protocol, which is not limited here.

In conclusion, with the technical solution according to embodiments of the disclosure, in case that the terminal performs the uplink transmission by the multiple antenna panels simultaneously, the output power corresponding to each antenna panel during the uplink transmission is determined by the indication information indicating the output power corresponding to the multiple antenna panels, thus realizing the control of the output powers of the multiple antenna panels that perform the uplink transmission simultaneously, promoting a deployment of the multiple antenna panels for the uplink transmission simultaneously, and improving a throughput of the uplink transmission.

In embodiments of the disclosure, the total output power is indicated to the terminal by the indication information, and the terminal allocates the output power to the multiple antenna panels that perform the uplink transmission simultaneously based on the total output power, thus realizing the power control when the uplink transmission is performed by the multiple antenna panels simultaneously in the space division scene.

Referring to FIG. 7, FIG. 7 is a flow chart illustrating a method for controlling a power according to an exemplary embodiment of the disclosure. In embodiments of the disclosure, the indication information indicates that the total output power is determined based on at least two power control parameter sets. The method includes the following.

At block 710, indication information is received, in which, the indication information indicates that the total output power corresponding to at least two antenna panels during uplink transmission is determined based on the at least two power control parameter sets.

Alternatively, each power control parameter set includes at least one of:

A. a power target value $P_o$ of an open-loop receiver;

B. a road loss compensation factor $\alpha$;

where, $0 < \alpha \leq 1$, it is worth noting that, when $\alpha=1$, it indicates a full path loss compensation, and when $0 < \alpha < 1$, it indicates a partial path loss compensation;

C. a downlink path loss estimation value PL-RS; and

D. a first power control adjustment state value.

Alternatively, the terminal receives an RRC signaling sent by the access network device, and the RRC signaling indicates the at least two power control parameter sets.

Alternatively, the terminal receives a media access control (MAC) control element (CE) signaling sent by the access network device. The MAC CE signaling indicates the at least two power control parameter sets.

Alternatively, the terminal receives a downlink control information (DCI) signaling sent by the access network device. The DCI signaling indicates the at least two power control parameter sets.

At block 720, a total output power is determined based on the at least two power control parameter sets.

For example, an expected output power may be obtained based on each power control parameter set.

In some embodiments, the terminal determines candidate output powers corresponding to the at least two power control parameter sets respectively; and determine a maximum power among the at least two candidate output powers as the total output power; or, determine a minimum value among the at least two candidate output powers as the total output power; or, determine an average value of the at least two candidate output powers as the total output power; or, determine a sum of the at least two candidate output powers as the total output power.

In an example, for example, the terminal receives the at least two power control parameter sets sent by the access network device, including a first power control parameter set and a second power control parameter set. A first candidate output power $P_1$ is determined based on the first power control parameter set, and a second candidate output power $P_2$ is determined by the second power control parameter set, then the total output power $P_{total}$ may be one of max $\{P_1, P_2\}$, min$\{P_1,P_2\}$, or aver$\{P_1,P_2\}$.

In another possible embodiments, the indication information indicates that the total output power corresponding to the at least two antenna panels during the uplink transmission is determined by one power control parameter set.

At block 730, an output power corresponding to each of the at least two antenna panels that perform the uplink transmission simultaneously is determined based on the total output power.

For example, actions at block 730 may be realized as actions at block 620, which is not repeated here.

In conclusion, in the technical solution according to embodiments of the disclosure, in case that the terminal performs the uplink transmission by the multiple antenna panels simultaneously, the output power corresponding to each antenna panel that performs the uplink transmission is determined by the indication information indicating the output power corresponding to the multiple antenna panels, thus realizing the control of the output power of the multiple antenna panels that perform the uplink transmission simultaneously, promoting a deployment of the multiple antenna panels that perform the uplink transmission simultaneously, and improving a throughput of the uplink transmission.

In embodiments of the disclosure, the total output power is indicated to the terminal by the indication information, and the terminal allocates the output power to the multiple antenna panels that perform the uplink transmission simultaneously based on the total output power, thus realizing the power control when the uplink transmission is performed simultaneously by the multiple antenna panels in the space division scene.

In embodiments of the disclosure, the total output power is determined by the at least two power control parameter sets indicated by the access network device, thus realizing the power control when the multiple antenna panels perform the uplink transmission simultaneously based on the total output power.

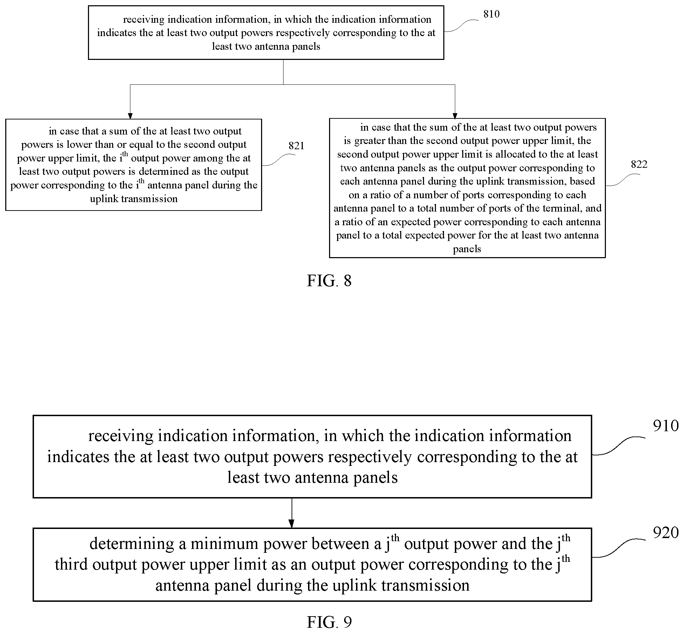

Referring to FIG. 8, FIG. 8 is a flow chart illustrating a method for controlling a power according to an exemplary embodiment of the disclosure. In embodiments of the disclosure, an output power indicated by indication information is at least two output powers corresponding to at least two antenna panels, where an $i^{th}$ output power corresponds to an $i^{th}$ antenna panel. The method includes the following.

At block 810, indication information is received, in which the indication information indicates the at least two output powers respectively corresponding to the at least two antenna panels.

In embodiments of the disclosure, the indication information indicates the at least two output powers. The at least two output powers correspond to the at least two antenna panels, that is, the $i^{th}$ output power corresponds to the $i^{th}$ antenna panel, where i is a positive integer.

At block 821, in case that a sum of the at least two output powers is lower than or equal to the second output power upper limit $P_{CMAX2}$, the $i^{th}$ output power among the at least two output powers is determined as the output power corresponding to the $i^{th}$ antenna panel during the uplink transmission.

In some embodiments, the terminal corresponds to a third output power upper limit $P_{CMAX2}$. For example, the terminal determines a second power transmission upper limit $P_{CMAX2}$ based on a protocol, and the second power transmission upper limit $P_{CMAX2}$ is configured to limit the sum of the output powers of the at least two antenna panels, that is, a maximum output power that may be achieved when the at least two antenna panels perform the uplink transmission simultaneously.

For example, in case that the sum of the output powers of the at least two output powers indicated by the indication information does not exceed the second output power upper limit $P_{CMAX2}$, it is determined that the at least two output powers may be respectively used as the output power corresponding to each of the at least two antenna panels, that is, the $i^{th}$ output power is determined as the output power corresponding to the $i^{th}$ antenna panel during the uplink transmission.

At block 822, in case that the sum of the at least two output powers is greater than the second output power upper limit $P_{CMAX2}$, the second output power upper limit $P_{CMAX2}$ is allocated to the at least two antenna panels as the output power corresponding to each antenna panel during the uplink transmission, based on a ratio of a number of ports corresponding to each antenna panel to a total number of ports of the terminal, and a ratio of an expected power corresponding to each antenna panel to a total expected power for the at least two antenna panels.

For example, when the sum of the at least two output powers indicated by the indication information exceeds the second output power upper limit $P_{CMAX2}$, it means that the terminal may not employ the output powers indicated by the indication information to the power control of the antenna panel, so the second output power upper limit $P_{CMAX2}$ is allocated to the at least two antenna panels as the output power corresponding to each antenna panel during the uplink transmission.

For example, when the second output power upper limit $P_{CMAX2}$ is allocated, the allocation is performed by considering the expected power corresponding to the antenna panel and the port simultaneously. For example, the number of ports corresponds to a first weight a, the expected power corresponds to the second weight b, $0 \leq a \leq 1$, $0 \leq b \leq 1$, and a+b=1. In case that a total number of ports of the terminal is N, the number of the at least two antenna panels is n, the number of ports corresponding to the $i^{th}$ antenna panel among the at least two antenna panels is $N_i$, and an expected power corresponding to the $i^{th}$ antenna panel is $P_i$, the output power allocated to the $i^{th}$ antenna panel is

$$\left( a(P_i / \textstyle\sum_{i=1}^{n} P_i) + b(N_i/N) \right) P_{CMAX2},$$ where i, n and N are all positive integers. In an example, in case that a=0 and b=1, the output power allocated to the $i^{th}$ antenna panel is $(N_i/N)P_{CMAX2}$. In case that a=1 and b=0, the output power allocated to the $i^{th}$ antenna panel is $(P_i/\sum_{i=1}^{n} P_i)P_{CMAX2}$ .

In an example, description is made by taking that the terminal has two antenna panels as an example, that is, the at least two antenna panels include a first antenna panel and a second antenna panel. The first antenna panel includes $N_1$ ports, the second antenna panel includes $N_2$ ports, and the total number of ports of the terminal is N, where N1, N2 and n are positive integers. A first expected power corresponding to the first antenna panel is $P_1$, and a second expected power corresponding to the second antenna panel is $P_2$. The number of ports and the expected power correspond to different weights respectively, so a first output power $P_{panel1}$ allocated to the first antenna panel is $(aP_1/(P_1 + P_2) + b\, N_1/N)P_{CMAX2}$, and a second output power $P_{panel2}$ allocated to the second antenna panel is $(aP_2/(P_1 + P_2) + b\, N_2/N)P_{CMAX2}$.

Alternatively, the first weight a and the second weight b may be indicated by the indication information. Alternatively, the first weight a and the second weight b may be indicated by the access network device through a signaling. Alternatively, the first weight a and the second weight b may be set by the terminal itself. Alternatively, the first weight a and the second weight b may be defined by a protocol.

In another embodiment, power equal division may be performed only based on the ports. That is, in case that the sum of the at least two output powers is greater than the second output power upper limit, the second output power upper limit is allocated to the at least two antenna panels as the output power corresponding to each antenna panel during the uplink transmission based on the ratio of the number of ports corresponding to each antenna panel to the total number of ports of the terminal. It is worth noting that in the above process, the terminal directly performs power allocation based on the number of ports, without involving the first weight and the second weight, which is the same as an allocation result when a=0 and b=1 above, but has different meanings.

For example, in case that the total number of ports of the terminal is N and the number of ports corresponding to the $i^{th}$ antenna panel among the at least two antenna panels is $N_i$, the output power allocated to the $i^{th}$ antenna panel is $(N_i/N)P_{CMAX2}$, where the N ports above are configured for the uplink transmission, and i and N are positive integers.

In an example, description is made by taking that the terminal has the two antenna panels, that is, the at least two antenna panels include the first antenna panel and the second antenna panel. For example, the first antenna panel includes the $N_1$ ports, and the second antenna panel includes the $N_2$ ports, where $N_1$ and $N_2$ are positive integers. The first output power $P_{panel1}$ allocated to the first antenna panel is $(N_1/N)P_{CMAX2}$, and the second output power $P_{panel2}$ allocated to the second antenna panel is $(N_2/N)P$.

In another embodiment, power allocation may be performed only based on the ratio of the expected power corresponding to each antenna panel to the total expected power corresponding to all antenna panels. That is, in case that the sum of the at least two output powers is greater than the second output power upper limit, the second output power upper limit is allocated to the at least two antenna panels as the output power corresponding to each antenna panel during the uplink transmission based on the ratio of the expected power corresponding to each antenna panel to the total expected power for the at least two antenna panels. It is worth noting that, in the above process, the terminal directly performs power allocation based on the expected power, without involving the first weight and the second weight, which is the same as an allocation result when a=1 and b=0, but has different meanings.

For example, in case that the total expected power corresponding to the at least two antenna panels is $\sum_{i=1}^{n} P_i$ , where $P_i$ represents the expected power corresponding to the $i^{th}$ antenna panel, the number of the at least two antenna panels is n, and i and n are positive integers, the output power allocated to the $i^{th}$ antenna panel is $(P_i/\sum_{i=1}^{n} P_i)P_{CMAX2}$ .

In an example, description is made by taking that the terminal has the two antenna panels, that is, the at least two antenna panels include the first antenna panel and the second antenna panel. For example, the first expected power corresponding to the first antenna panel is $P_1$, and the second expected power corresponding to the second antenna panel is $P_2$. The first output power $P_{panel1}$ allocated to the first antenna panel is $(P_1/(P_1 + P_2))P_{CMAX2}$, and the second output power $P_{panel2}$ allocated to the second antenna panel is $(P_2/(P_1 + P_2))P_{CMAX2}$.

In some embodiments, the expected power corresponding to the antenna panel may be determined based on a power control parameter set indicated by the access network device. For example, the access network device indicates the power control parameter set corresponding to a TRP, and then the expected power corresponding to the antenna panel is determined by the power control parameter set corresponding to the TRP pointed by the antenna panel during the uplink transmission.

In conclusion, in the technical solution according to embodiments of the disclosure, in case that the terminal performs the uplink transmission by the multiple antenna panels simultaneously, the output power corresponding to each antenna panel during the uplink transmission is determined by the indication information indicating the output power corresponding to the multiple antenna panels, thus realizing the control of the output powers of the multiple antenna panels during the uplink transmission simultaneously, promoting a deployment of the multiple antenna panels for the uplink transmission simultaneously, and improving a throughput of uplink transmission.

In embodiments of the disclosure, the indication information indicates the at least two output powers to the terminal, and the at least output powers of the at least two antenna panels that performs the uplink transmission simultaneously are configured based on a relationship between the sum of the at least two output powers and the second output power upper limit.

Referring to FIG. 9, FIG. 9 is a flow chart illustrating a method for controlling a power according to an exemplary embodiment of the disclosure. In embodiments of the disclosure, an output power indicated by indication information is at least two output powers corresponding to at least two antenna panels, where an $i^{th}$ output power corresponds to an $i^{th}$ antenna panel. The method includes the following.

At block 910, indication information is received, in which the indication information indicates the at least two output powers respectively corresponding to the at least two antenna panels.

In embodiments of the disclosure, the indication information indicates the at least two output powers. The at least two output powers correspond to the at least two antenna panels, that is, the $i^{th}$ output power corresponds to the $i^{th}$ antenna panel, where i is a positive integer.

Alternatively, a corresponding relationship between the power power and the antenna panel may be configured by the base station, or may be corresponding by default.

At block 920, a minimum power between a $j^{th}$ output power and the $j^{th}$ third output power upper limit is determined as an output power corresponding to the $j^{th}$ antenna panel during the uplink transmission.

In some embodiments, the terminal corresponds to a third output power upper limit $P_{CMAX3}$ correspondingly. For example, the terminal determines the third output power upper limit $P_{CMAX3}$ based on a protocol, that is, the at least two antenna panels respectively correspond to the third output power upper limit $P_{CMAX3}$, where the $j^{th}$ antenna panel corresponds to the j th third output power upper upper limit $P_{CMAX3}$, and j is a positive integer.

In embodiments of the disclosure, the output power of the $j^{th}$ antenna panel is determined based on both the $j^{th}$ output power indicated by the indication information and the $j^{th}$ third output power upper limit $P_{CMAX3}$ corresponding to the $j^{th}$ antenna panel. For example, in case that the $j^{th}$ output power indicated by the indication information does not exceed the $j^{th}$ third output power upper limit $P_{CMAX3}$, the output power of the $j^{th}$ antenna panel is determined as the $j^{th}$ output power. In case that the $j^{th}$ output power indicated by the indication information exceeds the $j^{th}$ third output power upper limit $P_{CMAX3}$, the output power of the $j^{th}$ antenna panel is determined as the $j^{th}$ third output power upper limit $P_{CMAX3}$. That is, the output power $P_{panelj}$ of the $j^{th}$ antenna panel = min $\{P_j, P_{CMAX3}\}$, where $P_j$ is the $j^{th}$ output power.

In conclusion, in the technical solution according to embodiments of the disclosure, in case that the terminal performs the uplink transmission by the multiple antenna panels simultaneously, the output power corresponding to each antenna panel during the uplink transmission is determined by the indication information indicating the output power corresponding to the multiple antenna panels, thus realizing the control of the output powers of the multiple antenna panels that perform the uplink transmission simultaneously, promoting a deployment of the multiple antenna panels that perform the uplink transmission simultaneously, and improving a throughput of the uplink transmission.

In embodiments of the disclosure, the indication information indicates the at least two output powers to the terminal, and the at least output powers of the at least two antenna panels that perform the uplink transmission simultaneously are configured based on a relationship between the output power corresponding to each antenna panel and the third output power upper limit.

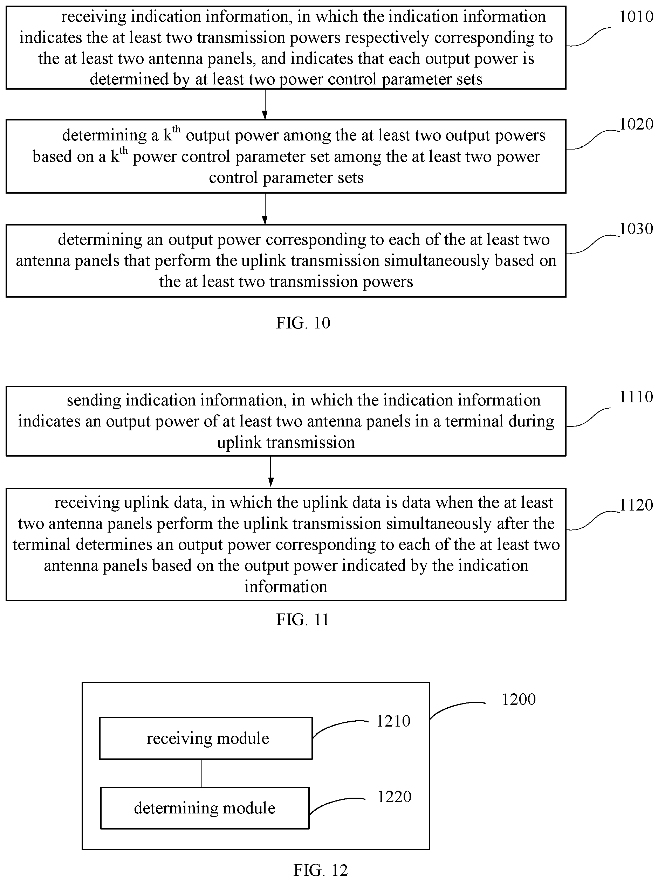

Referring to FIG. 10, FIG. 10 is a flow chart illustrating a method for controlling a power according to an exemplary embodiment of the disclosure. In embodiments of the disclosure, the indication information indicates that at least two output powers are determined based on at least two power control parameter sets. The method includes the following.

At block 1010, indication information is received, in which the indication information indicates the at least two transmission powers respectively corresponding to the at least two antenna panels, and indicates that each output power is determined by at least two power control parameter sets.

In embodiments of the disclosure, the indication information indicates the at least two output powers. The at least two output powers correspond to the at least two antenna panels, that is, an $i^{th}$ output power corresponds to an $i^{th}$ antenna panel, i is a positive integer.

Alternatively, each power control parameter set includes at least one of:

A. a power target value $P_o$ of an open-loop receiver;
B. a road loss compensation factor $\alpha$;
C. a downlink path loss estimation value PL-RS; and
D. a first power control adjustment state value.

At block 1020, a $k^{th}$ output power among the at least two output powers is determined based on a $k^{th}$ power control parameter set among the at least two power control parameter sets.

For example, the at least two power control parameter sets received by the terminal are configured to determine different output powers indicated in the indication information, that is, one power control parameter set is configured to determine one output power indicated in the indication information, and the output power in the indication information corresponds to the antenna panel of the terminal.

At block 1030, an output power corresponding to each of the at least two antenna panels that perform the uplink transmission simultaneously is determined based on the at least two transmission powers.

For example, the actions at block 1030 may be realized as the actions at blocks 821 and 822, or implemented as the actions at block 920, which is not repeated here.

In conclusion, in the technical solution according to embodiments of the disclosure, in case that the terminal performs the uplink transmission by the multiple antenna panels simultaneously, the output power corresponding to each antenna panel during the uplink transmission is determined by the indication information indicating the output power corresponding to the multiple antenna panels, thus realizing the control of the output powers of the multiple antenna panels that perform the uplink transmission simultaneously, promoting a deployment of the multiple antenna panels that perform the uplink transmission simultaneously, and improving a throughput of the uplink transmission.

In embodiments of the disclosure, the at least two output powers indicated by the indication information are determined by the at least two power control parameter sets indicated by the access network device, such that the power control when the multiple antenna panels perform the uplink transmission simultaneously is realized based on the at least two output powers.

Referring to FIG. 11, FIG. 11 is a flow chart illustrating a method for controlling a power according to an exemplary embodiment of the disclosure. In embodiments of the disclosure, description is made by taking the method is executed by a network device. The method includes the following.

At block 1110, indication information is sent, in which the indication information indicates an output power of at least two antenna panels in a terminal during uplink transmission.

Alternatively, the indication information is information sent by the network device to the terminal. The network device includes at least one of an access network device, a core network device, or other device.

Alternatively, the output power indicated by the indication information is a total output power corresponding to the at least two antenna panels.

Alternatively, the indication information indicates that the total output power is determined based on at least two power control parameter sets; and the network device send the at least two power control parameter sets to the terminal.

Alternatively, the output power indicated by the indication information is at least two output powers corresponding to the at least two antenna panels, in which an $i^{th}$ output power corresponds to an $i^{th}$ antenna panel.

Alternatively, the indication information indicates that the at least two output powers are determined based on the at least two sets of power control parameters, and the at least two power control parameter sets are sent.

Alternatively, a radio resource control (RRC) signaling is received , in which the RRC signaling includes the at least two power control parameter sets; or, an MAC CE signaling is received, in which the MAC CE signaling includes the at least two power control parameter sets; or a DCI signaling is received, in which the DCI signaling includes the at least two power control parameter sets.

At block 1120, uplink data is received, in which the uplink data is data when the at least two antenna panels perform the uplink transmission simultaneously after the terminal determines an output power corresponding to each of the at least two antenna panels based on the output power indicated by the indication information.

In embodiments of the disclosure, the uplink data is uplink data sent by the at least two antenna panels in the terminal by different uplink channels/signals. Alternatively, the uplink channel may be a PUSCH and PUCCH, and the uplink signal may be an uplink reference signal, such as SRS.

Alternatively, the uplink data above may be received by multiple TRPs or one TRP.

In conclusion, in the technical solution according to embodiments of the disclosure, the network device sends the indication information to the terminal to indicate the output power corresponding to the multiple antenna panels during the uplink transmission, and determines the output power corresponding to each antenna panel during the uplink transmission, thus realizing the control of the output powers of the multiple antenna panels that performs the uplink transmission simultaneously, promoting a deployment of the multiple antenna panels that performs the uplink transmission simultaneously, and improving a throughput of the uplink transmission.

FIG. 12 is a block diagram illustrating an apparatus for controlling a power according to an exemplary embodiment of the disclosure. As illustrated FIG. 12, taking that the apparatus is applied to a terminal as an example, the apparatus 1200 includes a receiving module 1210 and a determining module 1220.

The receiving module 1210 is configured to receive indication information, in which the indication information indicates an output power corresponding to at least two antenna panels in the terminal during uplink transmission.

The determining module 1220 is configured to determine an output power corresponding to each of the at least two antenna panels that perform the uplink transmission simultaneously, based on the output power.

In some alternative embodiments, the output power indicated by the indication information is a total output power corresponding to the at least two antenna panels.

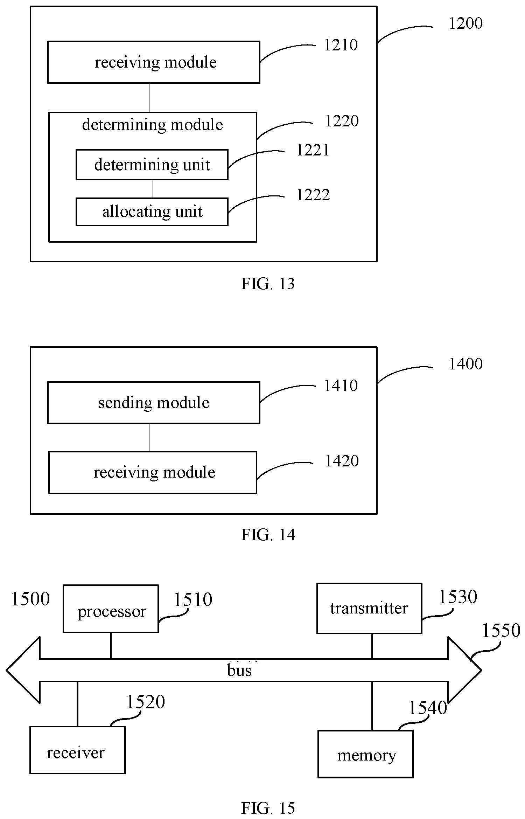

In some alternative embodiments, as illustrated in FIG. 13, the determining module 1210 also includes a determining unit 1211 and an allocating unit 1212.

The terminal corresponds to a first output power upper limit.

The determining unit 1211 is configured to determine a minimum value between the first output power upper limit and the total output power as a target output power .

The allocating unit 1212 is configured to allocate the target output power P to the at least two antenna panels as the output power corresponding to each antenna panel during the uplink transmission.

In some alternative embodiments, the allocating unit 1212 is also configured to allocate the target output power P to the at least two antenna panels as the output power corresponding to each antenna panel during the uplink transmission, based on a ratio of a number of ports corresponding to each of the at least two antenna panels to a total number of ports of the terminal.

In some alternative embodiments, the at least two antenna panels include a first antenna panel and a second antenna panel. The first antenna panel includes $N_1$ ports, the second antenna panel includes $N_2$ ports, and the total number of ports of the terminal is N, where $N_1$, $N_2$ and N are positive integers.

A first output power allocated to the first antenna panel is $\dfrac{N_1}{N}P$ .

A second output power allocated to the second antenna panel is $\dfrac{N_2}{N}P$ .

In some alternative embodiments, the allocating unit 1012 is also configured to allocate the target output power P to the at least two antenna panels as the output power corresponding to each antenna panel during the uplink transmission, based on a ratio of an expected power corresponding to each of the at least two antenna panels to a total expected power for the at least two antenna panels.

In some alternative embodiments, the at least two antenna panels include a first antenna panel and a second antenna panel, a first expected power corresponding to the first antenna panel is $P_1$, and a second expected power corresponding to the second antenna panel is $P_2$.

A first output power allocated to the first antenna panel is $\dfrac{P_1}{P_1+P_2}P$ .

A second output power allocated to the second antenna panel is $\dfrac{P_2}{P_1+P_2}P$ .

In some alternative embodiments, the allocating unit 1012 is also configured to allocate the target output power P to the at least two antenna panels as the output power corresponding to each antenna panel during the uplink transmission, based on a ratio of a number of ports corresponding to each of the at least two antenna panels to a total number of ports of the terminal, and a ratio of an expected power corresponding to each of the at least two antenna panels to a total expected power for the at least two antenna panels.

In some alternative embodiments, the at least two antenna panels include a first antenna panel and a second antenna panel. The first antenna panel includes $N_1$ ports and the second antenna panel includes $N_2$ ports, the total number of ports of the terminal is N, where $N_1$, $N_2$ and N are positive integers, a first expected power corresponding to the first antenna panel is $P_1$, and a second expected power corresponding to the second antenna panel is $P_2$.

The number of ports corresponds to a first weight a, and the expected power corresponds to a second weight b, where 0 < a < 1, 0 < b < 1, and a+b = 1.

A first output power allocated to the first antenna panel is $\left(a\dfrac{P_1}{P_1+P_2}+b\dfrac{N_1}{N}\right)P$ .

A second output power allocated to the second antenna panel is $\left(a\dfrac{P_2}{P_1+P_2}+b\dfrac{N_2}{N}\right)P$ .

In some alternative embodiments, the indication information indicates that the total output power is determined based on at least two power control parameter sets.

The receiving module 1210 is also configured to receive the at least two power control parameter sets.

The determining module 1220 is also configured to determine the total output power based on the at least two power control parameter sets.

In some alternative embodiments, the determining unit 1211 is also configured to determine at least two candidate output powers corresponding to the at least two power control parameter sets.

The determining unit 1211 is also configured to determine a maximum power among the at least two candidate output powers as the total output power; or, determine a minimum value among the at least two candidate output powers as the total output power; or, determine an average value of the at least two candidate output powers as the total output power; or, determine a sum of the at least two candidate output powers as the total output power.

In some alternative embodiments, the output power indicated by the indication information is at least two output powers corresponding to the at least two antenna panels, in which an $i^{th}$ output power corresponds to an $i^{th}$ antenna panel.

In some alternative embodiments, the terminal corresponds to a second output power upper limit $P_{CMAX2}$, and the second output power upper limit $P_{CMAX2}$ is configured to limit a sum of at least two output powers of the at least two antenna panels.

In some alternative embodiments, the determining unit 1211 is further configured to, in case that the sum of the at least two output powers is lower than or equal to the second output power upper limit $P_{CMAX2}$, determine the $i^{th}$ output power among the at least two output powers as the output power corresponding to the $i^{th}$ antenna panel during the uplink transmission.

In some alternative embodiments, the allocating unit 1212 is also configured to, in case that the sum of the at least two output powers is greater than the second output power upper limit $P_{CMAX2}$, allocate the second output power upper limit $P_{CMAX2}$ to the at least two antenna panels as the output power corresponding to each antenna panel during the uplink transmission, based on a ratio of a number of ports corresponding to each antenna panel to a total number of ports of the terminal, and a ratio of an expected power corresponding to each antenna panel to a total expected power for the at least two antenna panels.

In some alternative embodiments, the at least two antenna panels include a first antenna panel and a second antenna panel. The first antenna panel includes $N_1$ ports and the second antenna panel includes $N_2$ ports, the total number of ports of the terminal is N, where $N_1$, $N_2$ and N are positive integers, a first expected power corresponding to the first antenna panel is $P_1$, and a second expected power corresponding to the second antenna panel is $P_2$.

The number of ports corresponds to a first weight a, and the expected power corresponds to a second weight b, where $0 \leq a \leq 1$, $0 \leq b \leq 1$, and $a+b = 1$.

A first output power allocated to the first antenna panel is $\left( a \frac{P_1}{P_1+P_2} + b \frac{N_1}{N} \right) P_{CMAX2}$ .

A second output power allocated to the second antenna panel is $\left( a \frac{P_2}{P_1+P_2} + b \frac{N_2}{N} \right) P_{CMAX2}$ .

In some alternative embodiments, each of the at least two antenna panels corresponds to a third output power upper limit, in which a $j^{th}$ antenna panel corresponds to a $j^{th}$ third output power upper limit.

In some alternative embodiments, the determining unit 1211 is also configured to determine a minimum power between a $j^{th}$ output power and the $j^{th}$ third output power upper limit, as an output power corresponding to the $j^{th}$ antenna panel during the uplink transmission.

In some alternative embodiments, the indication information indicates that the at least two output powers are determined based on at least two power control parameter sets.

The receiving module 1210 is also configured to receive the at least two power control parameter sets.

The determining module 1210 is also configured to determine a $k^{th}$ output power among the at least two output powers based on a $k^{th}$ power control parameter set among the at least two power control parameter sets.

In some alternative embodiments, the receiving module 1210 is also configured to: receive an RRC signaling, in which the RRC signaling includes the at least two power control parameter sets; or

receive an MAC CE signaling, in which the MAC CE signaling includes the at least two power control parameter sets; or

receive a DC signaling, in which the DCI signaling includes the at least two power control parameter sets.

In conclusion, with the apparatus according to embodiments of the disclosure, in case that the terminal performs the uplink transmission by the multiple antenna panels simultaneously, the transmission power corresponding to each antenna panel during the uplink transmission is determined by the indication information indicating the output power corresponding to the multiple antenna panels, thus realizing the control of the output powers of the multiple antenna panels that perform the uplink transmission simultaneously, promoting a deployment of the multiple antenna panels that perform the uplink transmission simultaneously, and improving a throughput of the uplink transmission.

FIG. 14 is a block diagram illustrating an apparatus for controlling a power according to an exemplary embodiment of the disclosure. As illustrated FIG. 12, taking that the apparatus is applied to a network device as an example, the apparatus 1400 includes a sending module 1410 and a receiving module 1420.

The sending module 1410 is configured to send indication information. The indication information indicates an output power of at least two antenna panels in a terminal during uplink transmission.

The sending module 1420 is configured to receive uplink data, in which the uplink data is data when the at least two antenna panels perform the uplink transmission simultaneously after the terminal determines an output power corresponding to each of the at least two antenna panels based on the output power indicated by the indication information.

In some alternative embodiments, the output power indicated by the indication information is a total output power corresponding to the at least two antenna panels.

In some alternative embodiments, the indication information indicates that the total output power is determined based on at least two power control parameter sets.

The sending module 1410 is also configured to send the at least two power control parameter sets.

In some alternative embodiments, the output power indicated by the indication information is at least two output powers corresponding to the at least two antenna panels, in which an $i^{th}$ output power corresponds to an $i^{th}$ antenna panel. In some alternative embodiments, the indication information indicates that the at least two output powers are determined based on the at least two sets of power control parameters.

The sending module 1410 is also configured to send the at least two power control parameter sets.

In some alternative embodiments, the sending module 1410 is also configured to: send an RRC signaling, in which the RRC signaling includes the at least two power control parameter sets;
or,

> send an MAC CE signaling, in which the MAC CE signaling includes the at least two power control parameter sets;
> or
> send a DCI signaling, in which the DCI signaling includes the at least two power control parameter sets.

In conclusion, with the apparatus according to embodiments of the disclosure, the network device sends the indication information to the terminal for indicating the output power corresponding to the multiple antenna panels during the uplink transmission, and determines the output power corresponding to each antenna panel during the uplink transmission, thus realizing the control of the output powers of the multiple antenna panels that perform the uplink transmission simultaneously, promoting a deployment of the multiple antenna panels that perform the uplink transmission simultaneously, and improving a throughput of the uplink transmission.

FIG. 15 is a block diagram illustrating a communication device 1300 (which may be realized as the terminal and the network device above) according to an exemplary embodiment of the disclosure. The communication device 1500 includes a processor 1510, a receiver 1520, a transmitter 1530, a memory 1540 and a bus 1550.

The processor 1510 includes one or more processing cores. The processor 1510 is configured to execute various functional applications and information processing by running software programs and modules.

The receiver 1520 and the transmitter 1530 may be realized as a communication component, which may be a communication chip.

The memory 1540 is connected to the processor 1510 through the bus 1550.

The memory 1540 may be configured to store at least one instruction. The processor 1510 is configured to execute the at least one instruction, to realize the actions executed by the terminal in the above method embodiments or the actions executed by the access network device in the above method embodiments.

In addition, the memory 1540 may be realized by any type of volatile or nonvolatile memory device or their combination, including but not limited to: a magnetic disk or an optical disk, an erasable programmable read only memory (EEPROM), an erasable programmable read only memory (EPROM), a static random access memory (SRAM), a read only memory (ROM), a magnetic memory, a flash memory, a programmable read only memory (PROM).

An exemplary embodiment of the disclosure also provides a system for controlling a power. The system includes a terminal and a network device. The terminal includes the apparatus for controlling the power according to embodiments illustrated in FIGs. 12 and 13. The network device includes the apparatus for controlling the power according to embodiments illustrated FIG. 14.

An exemplary embodiment of the disclosure also provides a computer-readable storage medium. The computer-readable storage medium is configured to store at least one instruction, at least one program, a code set or an instruction set. The at least one instruction, the at least one program, the code set or the instruction set are loaded and executed by the processor to realize the actions in the method for controlling the power executed by the terminal and the actions in the method for controlling the power executed by the network device according to the above method embodiments.

Other implementations of the disclosure will be apparent to those skilled in the art from consideration of the specification and practice of the disclosure disclosed here. This application is intended to cover any variations, uses, or adaptations of the present disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exaction construction that has been described above and illustrated in the accompanying drawings, and that various modifications and changes can be made without departing from the scope thereof. It is intended that the scope of the present disclosure only be limited by the appended claims.

**Claims**

1. A method for controlling a power, performed by a terminal, comprising:

   receiving indication information, wherein the indication information indicates an output power corresponding to at least two antenna panels in the terminal during uplink transmission; and
   determining an output power corresponding to each of the at least two antenna panels that perform the uplink transmission simultaneously, based on the output power.

2. The method of claim 1, wherein,
   the output power indicated by the indication information is a total output power corresponding to the at least two antenna panels.

3. The method of claim 2, wherein the terminal corresponds to a first output power upper limit;
   determining the output power corresponding to each of the at least two antenna panels that perform the uplink transmission simultaneously based on the output power comprises:

   determining a minimum value between the first output power upper limit and the total output power as a target output power P; and
   allocating the target output power P to the at least two antenna panels as the output power corresponding to each antenna panel during the uplink transmission.

4. The method of claim 3, wherein allocating the target output power P to the at least two antenna panels as the output power corresponding to each antenna panel during the uplink transmission comprises:
   allocating the target output power P to the at least two antenna panels as the output power corresponding to each antenna panel during the uplink transmission, based on a ratio of a number of ports corresponding to each of the at least two antenna panels to a total number of ports of the terminal.

5. The method of claim 4, wherein the at least two antenna panels comprise a first antenna panel and a second antenna panel, wherein the first antenna panel comprises $N_1$ ports, the second antenna panel comprises $N_2$ ports, and the total number of ports of the terminal is N, where $N_1$, $N_2$ and N are positive integers;

   a first output power allocated to the first antenna panel is $\dfrac{N_1}{N}P$ ; and

   a second output power allocated to the second antenna panel is $\dfrac{N_2}{N}P$ .

6. The method of claim 3, wherein allocating the target output power P to the at least two antenna panels as the output power corresponding to each antenna panel during the uplink transmission comprises:
   allocating the target output power P to the at least two antenna panels as the output power corresponding to each antenna panel during the uplink transmission, based on a ratio of an expected power corresponding to each of the at least two antenna panels to a total expected power for the at least two antenna panels.

7. The method of claim 6, wherein the at least two antenna panels comprise a first antenna panel and a second antenna panel, a first expected power corresponding to the first antenna panel is $P_1$, and a second expected power corresponding to the second antenna panel is $P_2$;

   a first output power allocated to the first antenna panel is $\dfrac{P_1}{P_1+P_2}P$ ; and

   a second output power allocated to the second antenna panel is $\dfrac{P_2}{P_1+P_2}P$ .

8. The method of claim 3, wherein allocating the target output power P to the at least two antenna panels as the output power corresponding to each antenna panel during the uplink transmission comprises:
allocating the target output power P to the at least two antenna panels as the output power corresponding to each antenna panel during the uplink transmission, based on a ratio of a number of ports corresponding to each of the at least two antenna panels to a total number of ports of the terminal, and a ratio of an expected power corresponding to each of the at least two antenna panels to a total expected power for the at least two antenna panels.

9. The method of claim 8, wherein the at least two antenna panels comprise a first antenna panel and a second antenna panel, wherein the first antenna panel comprises $N_1$ ports and the second antenna panel comprises $N_2$ ports, the total number of ports of the terminal is N, where $N_1$, $N_2$ and N are positive integers, a first expected power corresponding to the first antenna panel is $P_1$, and a second expected power corresponding to the second antenna panel is $P_2$;

the number of ports corresponds to a first weight a, and the expected power corresponds to a second weight b, where $0 < a < 1$, $0 < b < 1$, and $a+b = 1$;

a first output power allocated to the first antenna panel is $\left( a\frac{P_1}{P_1+P_2} + b\frac{N_1}{N} \right) P$ ; and

a second output power allocated to the second antenna panel is $\left( a\frac{P_2}{P_1+P_2} + b\frac{N_2}{N} \right) P$ .

10. The method of any of claims 2 to 9, wherein the indication information indicates that the total output power is determined based on at least two power control parameter sets;
wherein the method further comprises:

receiving the at least two power control parameter sets; and
determining the total output power based on the at least two power control parameter sets.

11. The method of claim 10, wherein determining the total output power based on the at least two power control parameter sets comprises:

determining at least two candidate output powers corresponding to the at least two power control parameter sets; and
determining a maximum power among the at least two candidate output powers as the total output power; or, determining a minimum value among the at least two candidate output powers as the total output power; or, determining an average value of the at least two candidate output powers as the total output power; or, determining a sum of the at least two candidate output powers as the total output power.

12. The method of claim 1, wherein,
the output power indicated by the indication information is at least two output powers corresponding to the at least two antenna panels, wherein an $i^{th}$ output power corresponds to an $i^{th}$ antenna panel.

13. The method of claim 12, wherein,
the terminal corresponds to a second output power upper limit $P_{CMAX2}$, and the second output power upper limit $P_{CMAX2}$ is configured to limit a sum of at least two output powers of the at least two antenna panels.

14. The method of claim 13, wherein determining the output power corresponding to each of the at least two antenna panels during the uplink transmission based on an expected output power comprises:
in case that the sum of the at least two output powers is lower than or equal to the second output power upper limit $P_{CMAX2}$, determining the $i^{th}$ output power among the at least two output powers as the output power corresponding to the $i^{th}$ antenna panel during the uplink transmission.

15. The method according to claim 13, wherein determining the output power corresponding to each of the at least two antenna panels during the uplink transmission based on an expected output power comprises:
in case that the sum of the at least two output powers is greater than the second output power upper limit $P_{CMAX2}$, allocating the second output power upper limit $P_{CMAX2}$ to the at least two antenna panels as the output power corresponding to each antenna panel during the uplink transmission, based on a ratio of a number of ports corresponding to each antenna panel to a total number of ports of the terminal, and a ratio of an expected power corresponding to each antenna panel to a total expected power for the at least two antenna panels.

16. The method of claim 15, wherein the at least two antenna panels comprise a first antenna panel and a second antenna panel, wherein the first antenna panel comprises $N_1$ ports and the second antenna panel comprises $N_2$ ports, the total number of ports of the terminal is N, where $N_1$, $N_2$ and N are positive integers, a first expected power corresponding to the first antenna panel is $P_1$, and a second expected power corresponding to the second antenna panel is $P_2$,

the number of ports corresponds to a first weight a, and the expected power corresponds to a second weight b, where $0 \le a \le 1$, $0 \le b \le 1$, and a+b = 1;

a first output power allocated to the first antenna panel is $\left( a \frac{P_1}{P_1+P_2} + b \frac{N_1}{N} \right) P_{CMAX2}$ ; and

a second output power allocated to the second antenna panel is $\left( a \frac{P_2}{P_1+P_2} + b \frac{N_2}{N} \right) P_{CMAX2}$ .

17. The method of claim 12, wherein,
each of the at least two antenna panels corresponds to a third output power upper limit, wherein a $j^{th}$ antenna panel corresponds to a $j^{th}$ third output power upper limit.

18. The method of claim 17, wherein determining the output power corresponding to each of the at least two antenna panels during the uplink transmission based on an expected output power comprises:
determining a minimum power between a $j^{th}$ output power and the $j^{th}$ third output power upper limit, as an output power corresponding to the $j^{th}$ antenna panel during the uplink transmission.

19. The method of any of claims 12 to 18, wherein the indication information indicates that the at least two output powers are determined based on at least two power control parameter sets;
wherein the method further comprises:

receiving the at least two power control parameter sets;
determining a $k^{th}$ output power among the at least two output powers based on a $k^{th}$ power control parameter set among the at least two power control parameter sets.

20. The method of claim 10 or 19, wherein receiving at least two power control parameter sets sent by an access network device comprises:

receiving a radio resource control (RRC) signaling, wherein the RRC signaling comprises the at least two power control parameter sets; or
receiving a media access control control element (MAC CE) signaling, wherein the MAC CE signaling comprises the at least two power control parameter sets; or
receiving a downlink control information (DCI) signaling, wherein the DCI signaling comprises the at least two power control parameter sets.

21. A method for controlling a power, executed by a network device, comprising

sending indication information, wherein the indication information indicates an output power of at least two antenna panels in a terminal during uplink transmission; and
receiving uplink data, wherein the uplink data is data when the at least two antenna panels perform the uplink transmission simultaneously after the terminal determines an output power corresponding to each of the at least two antenna panels based on the output power indicated by the indication information.

22. The method of claim 21, wherein,
the output power indicated by the indication information is a total output power corresponding to the at least two antenna panels.

23. The method of claim 22, wherein the indication information indicates that the total output power is determined based on at least two power control parameter sets; and
sending the at least two power control parameter sets.

24. The method of claim 21, wherein the output power indicated by the indication information is at least two output powers corresponding to the at least two antenna panels, wherein an $i^{th}$ output power corresponds to an $i^{th}$ antenna panel.

25. The method of claim 24, wherein the indication information indicates that the at least two output powers are determined based on the at least two sets of power control parameters; and
sending the at least two power control parameter sets.

26. The method of claim 23 or 25, wherein sending the at least two power control parameter sets comprises:

sending a radio resource control (RRC) signaling, wherein the RRC signaling comprises the at least two power control parameter sets; or,
sending a media access control control unit (MAC CE) signaling, wherein the MAC CE signaling comprises the at least two power control parameter sets; or
sending a downlink control information (DCI) signaling, wherein the DCI signaling comprises the at least two power control parameter sets.

27. An apparatus for controlling a power, comprising:

a receiving module, configured to receive indication information, wherein the indication information indicates an output power corresponding to at least two antenna panels in the terminal during uplink transmission; and
a determining module, configured to determine an output power corresponding to each of the at least two antenna panels that perform the uplink transmission simultaneously, based on the output power.

28. An apparatus for controlling a power, executed by a network device, comprising

a sending module, configured to send indication information, wherein the indication information indicates an output power of at least two antenna panels in a terminal during uplink transmission; and
a receiving module, configured to receive uplink data, wherein the uplink data is data when the at least two antenna panels perform the uplink transmission simultaneously after the terminal determines an output power corresponding to each of the at least two antenna panels based on the output power indicated by the indication information.

29. A terminal, comprising:

a processor; and
a transceiver, connected with the processor;
wherein the processor is configured to load and execute executable instructions to realize the method for controlling the power of any one of claims 1 to 20.

30. A network device, comprising:

a processor;
a transceiver, connected with the processor; and
a memory for storing instructions executable by the processor;
wherein the processor is configured to load and execute the instructions to realize the method for controlling the power of any one of claims 21 to 26.

31. A computer-readable storage medium, wherein at least one program is stored in the computer-readable storage medium, and a processor is configured to load and execute the at least one program to realize the method for controlling the power of any one of claims 1 to 26.

FIG. 1

FIG. 2

FIG. 3

FIG. 4

EP 4 535 903 A1

| receiving indication information, in which the indication information indicates an output power corresponding to at least two antenna panels in the terminal during uplink transmission | 510 |

↓

| determining a output power corresponding to each of the at least two antenna panels that perform the uplink transmission simultaneously, based on the output power | 520 |

FIG. 5

| receiving indication information, in which the indication information indicates a total output power corresponding to at least two antenna panels in the terminal during uplink transmission | 610 |

↓

| determining a minimum value between a first output power upper limit and the total output power as a target output power | 620 |

↓

| allocating the target output power to the at least two antenna panels as the output power corresponding to each antenna panel during the uplink transmission | 630 |

FIG. 6

| receiving indication information, in which the indication information indicates that a total output power corresponding to at least two antenna panels during uplink transmission is determined based on the at least two power control parameter sets | 710 |

↓

| determining a total output power based on the at least two power control parameter sets | 720 |

↓

| determining an output power corresponding to each of the at least two antenna panels that perform the uplink transmission simultaneously based on the total output power | 730 |

FIG. 7

22

receiving indication information, in which the indication information indicates the at least two output powers respectively corresponding to the at least two antenna panels — 810

in case that a sum of the at least two output powers is lower than or equal to the second output power upper limit, the $i^{th}$ output power among the at least two output powers is determined as the output power corresponding to the $i^{th}$ antenna panel during the uplink transmission — 821

in case that the sum of the at least two output powers is greater than the second output power upper limit, the second output power upper limit is allocated to the at least two antenna panels as the output power corresponding to each antenna panel during the uplink transmission, based on a ratio of a number of ports corresponding to each antenna panel to a total number of ports of the terminal, and a ratio of an expected power corresponding to each antenna panel to a total expected power for the at least two antenna panels — 822

FIG. 8

receiving indication information, in which the indication information indicates the at least two output powers respectively corresponding to the at least two antenna panels — 910

determining a minimum power between a $j^{th}$ output power and the $j^{th}$ third output power upper limit as an output power corresponding to the $j^{th}$ antenna panel during the uplink transmission — 920

FIG. 9

receiving indication information, in which the indication information indicates the at least two transmission powers respectively corresponding to the at least two antenna panels, and indicates that each output power is determined by at least two power control parameter sets

1010

determining a $k^{th}$ output power among the at least two output powers based on a $k^{th}$ power control parameter set among the at least two power control parameter sets

1020

determining an output power corresponding to each of the at least two antenna panels that perform the uplink transmission simultaneously based on the at least two transmission powers

1030

FIG. 10

sending indication information, in which the indication information indicates an output power of at least two antenna panels in a terminal during uplink transmission

1110

receiving uplink data, in which the uplink data is data when the at least two antenna panels perform the uplink transmission simultaneously after the terminal determines an output power corresponding to each of the at least two antenna panels based on the output power indicated by the indication information

1120

FIG. 11

1200

receiving module — 1210

determining module — 1220

FIG. 12

```
┌─────────────────────────────────────────────┐
│                                          ╱── 1200
│   ┌─────────────────────────┐            │
│   │    receiving module     │──── 1210   │
│   └─────────────────────────┘            │
│                │                         │
│   ┌─────────────────────────┐            │
│   │  determining module  ────── 1220     │
│   │                                 1221 │
│   │   ┌──────────────────┐  ╱──          │
│   │   │ determining unit │             │
│   │   └──────────────────┘      1222    │
│   │            │          ╱──           │
│   │   ┌──────────────────┐             │
│   │   │  allocating unit │             │
│   │   └──────────────────┘             │
│   └─────────────────────────┘            │
└─────────────────────────────────────────────┘
```

FIG. 13

```
┌─────────────────────────────────────────────┐
│                                          ╱── 1400
│   ┌─────────────────────────┐            │
│   │     sending module      │──── 1410   │
│   └─────────────────────────┘            │
│                │                         │
│   ┌─────────────────────────┐            │
│   │    receiving module     │──── 1420   │
│   └─────────────────────────┘            │
└─────────────────────────────────────────────┘
```

FIG. 14

```
 1500   ┌───────────┐  1510        ┌────────────┐  1530
        │ processor │              │ transmitter│
        └───────────┘              └────────────┘   1550
            │                            │
  ◄═════════╪════════════════════════════╪═════════►
            │          bus               │
        ┌───────────┐  1520        ┌────────────┐  1540
        │ receiver  │              │   memory   │
        └───────────┘              └────────────┘
```

FIG. 15

<table>
<tr><td colspan="2">**INTERNATIONAL SEARCH REPORT**</td><td colspan="2">International application No.<br><br>**PCT/CN2022/095763**</td></tr>
</table>

**A.    CLASSIFICATION OF SUBJECT MATTER**

H04W72/12(2023.01)i;H04W52/08(2009.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; ENTXTC; CNKI: 多输入多输出, 功率控制, 指示, 天线面板, 发射功率, 多传输接收点, 同时, MIMO, power control, indicate, antenna panel, power, TRP, simultaneous

**C.    DOCUMENTS CONSIDERED TO BE RELEVANT**

| Category* | Citation of document, with indication, where appropriate, of the relevant passages | Relevant to claim No. |
|---|---|---|
| X | WO 2020132862 A1 (GUANGDONG OPPO MOBILE TELECOMMUNICATIONS CORP., LTD.) 02 July 2020 (2020-07-02)<br>description, p.1, line 6-line 15, p. 3, line 35-p. 9, line 1, and figures 1-8 | 1-2, 12, 19-31 |
| A | WO 2020118574 A1 (GUANGDONG OPPO MOBILE TELECOMMUNICATIONS CORP., LTD.) 18 June 2020 (2020-06-18)<br>p. 1, line 1-p. 8, line 41, and figures 1-5 | 1-31 |
| A | WO 2020124506 A1 (GUANGDONG OPPO MOBILE TELECOMMUNICATIONS CORP., LTD.) 25 June 2020 (2020-06-25)<br>p. 1, line 1-p. 11, line 5, and figures 1-8 | 1-31 |
| A | WO 2022016440 A1 (QUALCOMM INC. et al.) 27 January 2022 (2022-01-27)<br>description, paragraphs 0050-0151, and figures 1-18 | 1-31 |

☐ Further documents are listed in the continuation of Box C.      ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **01 February 2023** | **21 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/095763**

| Patent document cited in search report | | | Publication date (day/month/year) | Patent family member(s) | Publication date (day/month/year) |
|---|---|---|---|---|---|
| WO | 2020132862 | A1 | 02 July 2020 | None | |
| WO | 2020118574 | A1 | 18 June 2020 | None | |
| WO | 2020124506 | A1 | 25 June 2020 | None | |
| WO | 2022016440 | A1 | 27 January 2022 | None | |

Form PCT/ISA/210 (patent family annex) (July 2022)